# EUROPÄISCHE PATENTANMELDUNG

(11) **EP 0 973 251 A2**
(43) Veröffentlichungstag der Anmeldung: **19.01.2000**
(21) Anmeldenummer: 99112445.4
(22) Anmeldetag: 30.06.1999
(51) Int. Cl.: H02P 1/28

(54) **Anlaufschaltung mit Anlauftransformator für einen Drehstrom-Kurzschlussläufermotor**

(30) Priorität: 11.07.1998 DE 19831121
(71) Anmelder: Hinzen, Helmut, Dipl.-Ing., 46244 Bottrop-Kirchhellen (DE)
(72) Erfinder: Hinzen, Helmut, Dipl.-Ing., 46244 Bottrop-Kirchhellen (DE)
(74) Vertreter: Rohmann, Michael, Dr.

(57) **Zusammenfassung**

Anlaufschaltung mit Anlauftransformator für einen Drehstrom-Kurzschlußläufermotor. Die Anlaufschaltung weist Schaltschütze zur Einstellung mehrerer Anlaufstufen für den Anlauf des Drehstrom-Kurzschlußläufermotors auf. Zwischen je zwei Anlaufstufen in Form von Spannungsstufen sind Überschaltelemente aus einem Schaltschütz und einer Drossel vorgesehen.

## Beschreibung

Die Erfindung betrifft eine Anlaufschaltung mit Anlauftransformator für einen Drehstrom-Kurzschlußläufermotor, wobei die Anlaufschaltung Schaltschütze zur Einstellung mehrerer Anlaufstufen für den Anlauf des Drehstrom-Kurzschlußläufermotors aufweist.

Die oben genannte bekannte Anlaufschaltung, von der die Erfindung ausgeht (DE 198 04 043 A1), hat sich grundsätzlich bewährt. Bei dieser Anlaufschaltung sind mehrere Anlaufstufen vorgesehen und beim Umschalten in die verschiedenen Stufen werden unerwünscht hohe Einschalt- bzw. Umschaltstromstöße vermieden. Nichtsdestoweniger ist diese bekannte Anlaufschaltung verbesserungsfähig.

Aus der Praxis sind fernerhin Anlaufschaltungen von Drehstrom-Kurzschlußläufermotoren bekannt, die in der Regel als sogenannte Korndorfer-Anlaufschaltungen ausgeführt sind. Hier wird durch Spannungsabsenkung der Anlaufstrom gegenüber einem beim Anlauf bei voller Spannung auftretenden Anlaufstrom erheblich reduziert. Bei steigender Drehzahl des Motors wird auf die volle Spannung umgeschaltet. Bei diesen aus der Praxis bekannten Anlaufschaltungen ist lediglich ein zweistufiger Anlauf möglich. Mit Hilfe eines Zeitrelais wird die Umschaltung von der Anlaufspannung auf die volle Betriebsspannung gesteuert. Die meist wünschenswerte Anpassung der Drehmomentkennlinie des Motors durch Wahl der günstigsten Spannungsstufen an die Belastungskennlinie ist bei dieser Schaltung nicht möglich. Der bei den bekannten Anlaufschaltungen vorgesehene Überhitzungsschutz des Anlauftransformators verhindert nicht den Start des Anlaufvorgangs, wenn ein vollständiger Anlaufvorgang wegen zwischenzeitlicher Überhitzung des Anlauftransformators nicht möglich ist bzw. wenn die Temperaturreserve des Anlauftransformators nicht mehr für einen vollen Anlaufvorgang ausreicht. Bei Hochspannungswicklungen verhindert die notwendige Isolation, daß ein Temperaturfühler dem bei Anlauftransformatoren unvermeidlichen schnellen Temperaturanstieg der Wicklung folgt. Ein zuverlässiger Überhitzungsschutz ist daher nicht möglich.

Demgegenüber liegt der Erfindung das technische Problem zugrunde, eine Anlautschaltung anzugeben, die ein problemloses, funktionssicheres Anlaufen des Drehstrom-Kurzschlußläufermotors sowie ein funktionssicheres Umschalten in die verschiedenen Anlaufstufen erlaubt. Mit der erfindungsgemäßen Anlaufschaltung sollen auch unerwünscht hohe Einschalt- bzw. Umschaltströme vermieden werden. Funktionssicheres Anlaufen des Drehstrom-Kurzschlußläufermotors meint auch, daß vorzugsweise ein effektiver Überhitzungsschutz vorgesehen ist.

Zur Lösung des oben genannten technischen Problems lehrt die Erfindung eine Anlaufschaltung der eingangs genannten Art, welche dadurch gekennzeichnet ist, daß zwischen je zwei Anlaufstufen in Form von Spannungsstufen Überschaltelemente aus einem Schaltschütz und einer Drossel vorgesehen sind. Es liegt im Rahmen der Erfindung, daß zwischen zwei Spannungsstufen Überschaltelemente gesetzt sind, die aus einem kleinen Schütz und einer Drosselspule bestehen. Es liegt fernerhin im Rahmen der Erfindung, daß die Anlaufschaltung mit der Maßgabe eingerichtet ist, daß eine Unterbrechung des dem Drehstrom-Kurzschlußläufermotor zugeführten Motorstromes zu keinem Zeitpunkt des Anlaufes stattfindet. - Nachfolgend wird der Begriff Schaltschütz vereinfachend und verkürzend auch als Schütz wiedergegeben.

Nach sehr bevorzugter Ausführungsform der Erfindung ist eine elektronische Steuereinrichtung zur Steuerung der Umschaltung in die verschiedenen Anlaufstufen nach Maßgabe des jeweils ermittelten Motorstromes vorgesehen.

Es liegt im Rahmen der Erfindung, daß zum Start des Motoranlaufes zunächst Hauptschütz und Sternschütz eingeschaltet werden. Nach bevorzugter Ausführungsform der Erfindung wird dann ein erster Schütz geschlossen, so daß der Motor in der ersten Anlaufstufe anläuft und wird anschließend ein erstes Hilfsschütz geschlossen, wodurch ein Teil der Transformatorwicklung über eine erste Drossel kurzgeschlossen wird. Zweckmäßigerweise ist die erste Drossel mit der Maßgabe ausgelegt, daß nur ein geringer Kurzschlußstrom über die Drossel fließen kann, welcher Drossel und Schützkontakte wenig belastet. Bei einem vorgegebenen Netzstrom wird das erste Schütz geöffnet, so daß der volle Motorstrom über die erste Drossel fließt. Hierdurch gerät die erste Drossel in die magnetische Sättigung und verliert den größten Teil ihres induktiven Widerstandes, so daß dann nur noch ein geringer Gesamtwiderstand im Motorstromkreis liegt. Dementsprechend tritt nur ein kleiner Spannungseinbruch am Motor auf. Nach einer weiteren vorgegebenen Zeitspanne wird ein zweites Schütz geschlossen, so daß die zweite Anlaufstufe voll eingeschaltet ist. Zur Umschaltung in eine dritte Anlaufstufe wird das erste Hilfsschütz geschlossen sowie das zweite Schütz geöffnet, so daß der Motorstrom wieder über die erste Drossel fließt und die Sättigung dieser ersten Drossel erreicht wird. Im Anschluß daran wird ein drittes Schütz geschlossen, so daß der Motorstrom über dieses dritte Schütz fließt und somit die dritte Anlaufstufe eingeschaltet ist. Anschließend wird zweckmäßigerweise das erste Hilfsschütz wieder geöffnet. Vorstehend wurde die Betriebsweise einer Anlaufschaltung mit drei Anlaufstufen erläutert. Eine solche Anlaufschaltung ist somit dadurch gekennzeichnet, daß drei Anlaufstufen einstellbar sind und daß zwischen der ersten und der zweiten Anlaufstufe Überschaltelemente aus einem Schaltschütz und einer Drossel vorgesehen sind. Es liegt im Rahmen der Erfindung, daß die Anlaufschaltung mehr als drei Anlaufstufen aufweist. Nach einer weiteren bevorzugten Ausführungsform der Erfindung sind mit der Anlaufschaltung fünf Anlaufstufen einstellbar und sind zwischen der ersten und zweiten Anlaufstufe sowie zwischen der dritten und der vierten Anlaufstufe Überschaltelemente aus einem Schaltschütz und einer Drossel vorgesehen. Bei dieser letztgenannten Ausführungsform ist zweckmäßigerweise zwischen der dritten Anlaufstufe mit dem dritten Schütz und der fünften Anlaufstufe mit einem fünften Schütz eine vierte Anlaufstufe mit viertem Schütz sowie zweitem Hilfsschütz und zweiter Drossel vorgesehen. Es liegt im Rahmen der Erfindung, daß die vorstehend erläuterte Betriebsweise der ersten, zweiten und dritten Anlaufstufe beim Anlaufvorgang auf die dritte, vierte und fünfte Anlaufstufe angewendet wird. Es liegt grundsätzlich auch im Rahmen der Erfindung, mehr als fünf Anlaufstufen vorzusehen. Die jeweils letzte Stufe schließt nach Öffnen des Sternschützes die Trafowicklung kurz. Damit liegt der Motor an der vollen Spannung. Stets ist die letzte Anlaufstufe der direkte Anschluß des Motors an das Netz.

Nach sehr bevorzugter Ausführungsform der Erfindung wird mit der erfindungsgemäßen Anlaufschaltung auch ein mehrstufiger Auslauf des Motors durchgeführt, wobei die mehreren Anlaufstufen der Anlautschaltung im Vergleich zum Anlaufvorgang in umgekehrter Reihenfolge durchlaufen werden. Mit anderen Worten ist vorzugsweise mit der erfindungsgemäßen Anlaufschaltung auch ein dreistufiger oder mehrstufiger Auslauf des Motors möglich.

Nach bevorzugter Ausführungsform der Erfindung erfolgt die Umschaltung in die einzelnen Anlaufstufen nach Maßgabe des Motorstromes. Mit anderen Worten wird die Umschaltung auf die einzelnen Spannungsstufen in Abhängigkeit von dem Motorstrom bzw. in Abhängigkeit von dem Netzstrom gesteuert. Auf diese Weise wird erfindungsgemäß erreicht, daß die Umschaltung stets zum günstigsten Zeitpunkt erfolgt. Grundsätzlich wird also die Umschaltung bzw. werden die Umschaltungszeitpunkte bevorzugt nicht nach Maßgabe einer abgelaufenen Zeitspanne bestimmt. Es liegt aber auch im Rahmen der Erfindung, zusätzlich ein Zeitrelais in der erfindungsgemäßen Anlaufschaltung vorzusehen. Diesem Zeitrelais kommt jedoch im Rahmen der Erfindung nur noch eine Sicherheitsfunktion zu. Wenn innerhalb einer eingestellten Zeit - beispielsweise bei mechanischen Störungen - die vorgesehene Drehzahl und der dazugehörige Motorstrom nicht erreicht wird, wird zweckmäßigerweise der Anlaufvorgang mit Hilfe der elektronischen Steuerungseinrichtung automatisch abgebrochen. Auf diese Weise werden Schäden verhindert, die entstehen können, wenn ohne Rücksicht auf mechanische Defekte die volle Spannung an den Motor angelegt wird. - Das Zeitrelais kann auch zur Einstellung der günstigsten Anlaufspannung eingesetzt werden. Immer dann, wenn ein vom Zeitrelais geschaltetes optisches oder akustisches Signal auftritt, ist das Drehmoment des Motors zu niedrig für eine weitere Beschleunigung. Dann wird zweckmäßigerweise entweder der Umschaltstrom oder die Anlaufspannung höher eingestellt, um einen zügigen Hochlauf zu erzielen. Auf diese Weise kann bei unbekannten Drehmomentverläufen der Starter auf die günstigsten Anlaufbedingungen eingestellt werden.

Nach sehr bevorzugter Ausführungsform der Erfindung ist eine Wandlereinrichtung zur Erzeugung einer dem Motorstrom proportionalen Spannung vorgesehen und sind die Umschaltungen in die Anlaufstufen nach Maßgabe der Spannung mit der elektronischen Steuereinrichtung steuerbar. Die Zeitpunkte der Umschaltungen werden also nach Maßgabe der ermittelten Spannung von der elektronischen Steuerungseinrichtung festgelegt. Nach einer Ausführungsform der Erfindung kann auch ein mehrstufiger Auslauf des Drehstrom-Kurzschlußläufermotors auf die vorgenannte Weise gesteuert werden. Nach bevorzugter Ausführungsform wird der Auslaufvorgang durch ein zweites Zeitrelais stromunabhängig gesteuert. Zweckmäßigerweise werden dabei die Anlaufstufen des Anlaufvorganges in umgekehrter Reihenfolge durchlaufen.

Vorzugsweise sind die für die erfindungsgemäße Anlaufschaltung eingesetzten Drosseln als Drosselspulen ausgebildet.

Es liegt im Rahmen der Erfindung, daß die Schaltschütze als Dreiphasenschütze ausgebildet sind. - Nach bevorzugter Ausführungsform der Erfindung sind die Schützspulen der Schaltschütze an eine auf Hochspannungspotential liegende Hilfswicklung des Anlauftransformators angeschlossen. Es liegt somit im Rahmen der Erfindung, daß die Schützspulen der Schaltschütze für jede Phase aus der auf dem Hochspannungspotential liegenden Hilfswicklung gespeist werden. Die Hilfswicklung liegt zweckmäßigerweise in der Mitte des Regelbereiches der Transformatorwicklung des Anlauftransformators.

Die erfindungsgemäße Anlaufschaltung ist auch für den Hochspannungseinsatz, insbesondere auch für Hochspannungsmotoren, brauchbar. Nichtsdestoweniger können in einer erfindungsgemäßen Anlaufschaltung Niederspannungsschütze eingesetzt werden, die im Vergleich zu Hochspannungsschützen wesentlich preisgünstiger sind. Dies wird durch spezielle Ausgestaltung der erfindungsgemäßen Anlaufschaltung ermöglicht.

Nach sehr bevorzugter Ausführungsform der Erfindung ist eine Überhitzungsschutzeinrichtung zum Blockieren des Anlaufstartes bei zu hoher Temperatur des Anlauftransformators vorgesehen, wobei die Überhitzungsschutzeinrichtung zumindest einen Kondensator aufweist, dessen Endladezeit länger ist als die Abkühlzeit des Anlauftransformators und wobei bei entladenem Kondensator der Anlaufstart der Anlaufschaltung freigegeben ist. Die erfindungsgemäße Überhitzungsschutzeinrichtung verhindert somit einen Anlaufstart bei unzureichender Temperaturreserve des Anlauftransformators. Eine solche Überhitzungsschutzeinrichtung bewährt sich insbesondere bei Hochspannungsgeräten. Es liegt dabei im Rahmen der Erfindung, daß sowohl auf der Hochspannungsseite als auch auf der Niederspannungsseite jeweils ein Kondensator vorgesehen ist, dessen Entladezeit länger ist als die Abkühlzeit des Anlauftransformators. Wenn beide Kondensatoren entladen sind, ist der Anlauftransformator ausreichend abgekühlt und es kann gestartet werden bzw. der Anlaufstart ist freigegeben. Nach sehr bevorzugter Ausführungsform der Erfindung weist die Überhitzungsschutzeinrichtung zumindest einen Kaltleiter am Anlauftransformator auf und bei geladenem Kondensator und niederohmigem Kaltleiter wird der Anlaufstart freigegeben. Bei hochohmigem Kaltleiter wird dagegen der Anlaufstart blockiert. Es liegt im Rahmen der Erfindung, daß der Kaltleiter in der Transformatorwicklung des Anlauftransformators vorgesehen ist. Vorzugsweise wird bei niederohmigem Kaltleiter mittels einer Leuchtdiode über einen Lichtleiter ein Lichtsignal an die elektronische Steuereinrichtung gegeben und der Anlaufstart wird auf diese Weise eingeleitet.

Nach einer Ausführungsform der Erfindung weist der Anlauftransformator zwei Temperaturfühler auf und sind der elektronischen Steuereinrichtung Temperatursignale zur Auswertung zuführbar. Zweckmäßigerweise gibt ein erster Temperaturfühler für eine höhere Temperatur bei zu heißem Anlauftransformator ein Abschaltsignal an die elektronische Steuereinrichtung und unterbricht somit den Anlaufstart. Vorzugsweise ist ein zweiter Temperaturfühler für eine niedrigere Temperatur vorgesehen, mit welchem Temperaturfühler signalisiert wird, daß die Temperaturreserve des Anlauftransformators für einen erneuten Anlauf nicht mehr ausreicht. Dadurch wird ein Neustart bzw. ein erneuter Anlaufstart verhindert. Insoweit wird im Vergleich zu aus dem Stand der Technik bekannten Überhitzungsschutzeinrichtungen wirksam verhindert, daß der Anlauf erst nach dem Anlaufstart wegen Überhitzung abgebrochen wird.

Der Erfindung liegt die Erkenntnis zugrunde, daß ein sehr problemloses Anlaufen eines Drehstrom-Kurzschlußläufermotors sowie ein funktionssicheres Umschalten in mehrere Anlaufstufen möglich ist, wenn die erfindungsgemäße Anlaufschaltung verwirklicht wird. Durch eine besonders funktionssichere Betriebsweise zeichnet sich hierbei eine Anlaufschaltung mit einem erfindungsgemäßen Überhitzungsschutz aus. Mit einer erfindungsgemäßen Anlaufschaltung kann die Belastung von Schützkontakten und Drosseln sehr effektiv minimiert werden. Bei Hochspannungsbetrieb ist es möglich kostengünstige Niederspannungsschütze in einer Anlaufschaltung nach der Erfindung einzusetzen. Mit Hilfe der erfindungsgemäßen Anlaufschaltung können Spannungseinbrüche am Motor auf überraschend niedrige Werte gesenkt werden. Im Vergleich zu bekannten Anlaufschaltungen kann mit der erfindungsgemäßen Schaltung das Drehmoment des Motors durch Wahl der Anlaufstufen/Spannungsstufen dem von der angetriebenen Maschine benötigten Drehmoment optimal angepaßt werden. Es ergibt sich insbesondere eine einfache und problemlose lastabhängige Drehzahlregelung. Von besonderer Bedeutung ist auch, daß bei der erfindungsgemäßen Anlaufschaltung sehr effektiv unerwünscht hohe Einschaltströme bzw. Umschaltströme vermieden werden können.

Nachfolgend wird die Erfindung anhand einer lediglich ein Ausführungsbeispiel darstellenden Zeichnung näher erläutert. Es zeigen in schematischer Darstellung:
- **Fig. 1**: einen Stromlaufplan für eine erfindungsgemäße Anlaufschaltung,
- **Fig. 2**: einen Stromlaufplan einer erfindungsgemäßen Anlaufschaltung für Hochspannungsmotoren im Detail,
- **Fig. 3**: Stromkurven für die erfindungsgemäße Anlaufschaltung und für eine Anlaufschaltung nach dem Stand der Technik und
- **Fig. 4**: eine erfindungsgemäße Überhitzungsschutzeinrichtung.

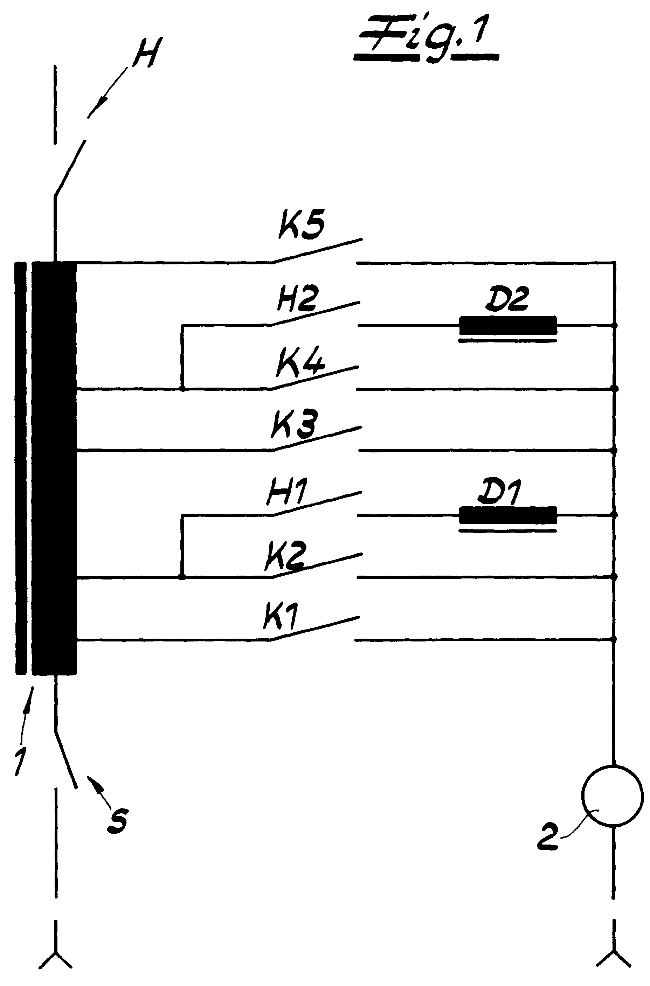

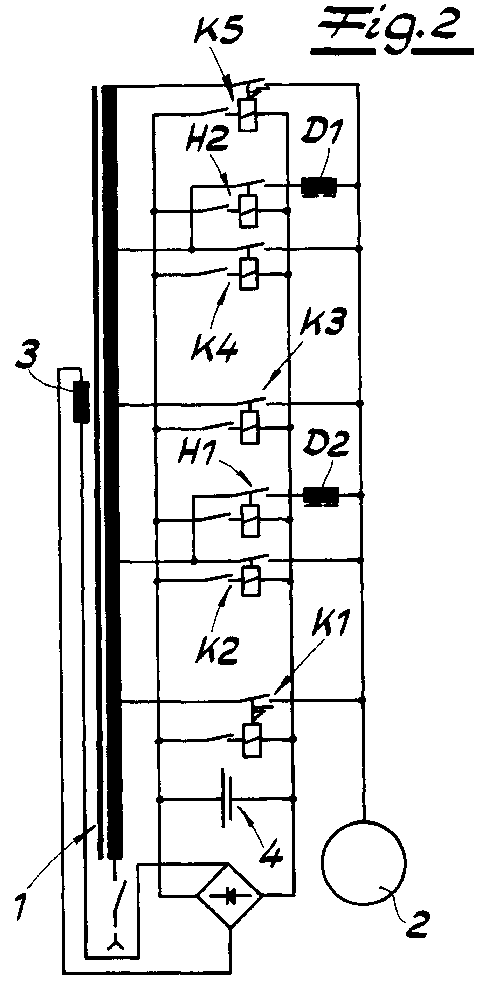

Die Fig. 1 und 2 zeigen eine Anlaufschaltung mit Anlauftransformator 1 für einen Drehstrom-Kurzschlußläufermotor 2. Die Anlaufschaltung weist Schütze K1, K2, K3, K4 und K5 sowie Hilfsschütze H1, H2 zur Einstellung mehrerer Anlaufstufen, im Ausführungsbeispiel fünf Anlaufstufen, für den Anlauf des Drehstrom-Kurzschlußläufermotors 2 auf. Erfindungsgemäß sind zwischen je zwei Anlaufstufen Überschaltelemente aus einem Schaltschütz und einer Drossel D1, D2 vorgesehen. Im Ausführungsbeispiel sind die Überschaltelemente zwischen der ersten und der zweiten Anlaufstufe sowie zwischen der dritten und der vierten Anlaufstufe vorgesehen. Die Betriebsweise der Anlaufschaltung ergibt sich aus den folgenden Ausführungen:

Zunächst werden Hauptschütz H und Sternschütz S eingeschaltet. Schütz K1 wird geschlossen, so daß der Drehstrom-Kurzschlußläufermotor 2, nachfolgend kurz Motor 2 genannt, in der ersten Anlaufstufe anläuft. Zur Umschaltung in die zweite Anlaufstufe schließt Hilfsschütz H1 einen Teil der Transformatorwicklung des Anlauftransformators 1 über die Drossel D1 kurz. Die Drossel D1 ist zweckmäßigerweise so ausgelegt, daß nur ein geringer Kurzschlußstrom fließt, der die Drossel D1 und die Schützkontakte wenig belastet. Nach einer Zeitspanne im Millisekundenbereich, vorzugsweise nach 100 bis 200 Millisekunden öffnet K1. Dann fließt der volle Motorstrom über die Drossel D1. Durch den hohen Strom gerät die Drossel D1 in die magnetische Sättigung und verliert den weitaus größten Teil ihres induktiven Widerstandes. Dann liegt nur noch ein geringer Gesamtwiderstand im Motorstromkreis und somit tritt nur ein kleiner Spannungseinbruch am Motor 2 auf. Nach einer Zeitspanne im Millisekundenbereich, vorzugsweise nach 100 bis 200 Millisekunden schließt Schütz K2. Dann ist die zweite Anlaufstufe voll eingeschaltet. Hilfsschütz H1 kann geschlossen bleiben, kann aber auch wieder geöffnet werden.

Zur Umschaltung in die dritte Anlaufstufe muß Hilfsschütz H1 geschlossen werden bzw. geschlossen sein. Schütz K2 öffnet und der Motorstrom fließt dann wieder über die Drossel D1 und treibt sie in die Sättigung. Schütz K3 wird geschlossen und übernimmt den Motorstrom. Ein Teil der Transformatorwicklung ist über die Drossel D1 kurzgeschlossen bei niedrigem Strom. Hilfsschütz H1 öffnet und der Umschaltvorgang in die dritte Anlaufstufe ist abgeschlossen. - Ebenso wie vorstehend für die Umschaltung von der ersten in die zweite und dann in die dritte Anlaufstufe erfolgt die Umschaltung von der dritten in die vierte Anlaufstufe und von der vierten in die fünfte Anlaufstufe. Die Umschaltung von der vierten in die fünfte, in diesem Fall also die letzte Anlaufstufe, erfolgt durch Öffnen des Sternschützes und Kurzschluß der Trafowicklung. Die letzte Stufe, das heißt im vorliegenden Fall die fünfte Anlaufstufe ist der direkte Anschluß des Motors 2 an das Netz.

Nach bevorzugter Ausführungsform und im Ausführungsbeispiel nach Fig. 2 sind die Schützspulen der Schaltschütze an eine auf Hochspannungspotential liegende Hilfswicklung 3 des Anlauftransformators 1 angeschlossen. Die Schütze werden zweckmäßigerweise phasenweise aus der Hilfswicklung 3, die auf dem hohen Potential jeder Phase liegt, gespeist. Vorzugsweise werden die Schütze über Lichtleiter von der elektronischen Steuereinrichtung gesteuert. - Die Hilfswicklung 3 liegt zweckmäßigerweise in der Mitte des Regelbereichs der Transformatorwicklung des Anlauftransformators 1. Dadurch wird erreicht, daß die Schützspulen durch kapazitiv übertragene Spannungsteile keine zu hohe Spannung gegen die auf dem Stufenpotential liegenden Kontakte annehmen können. Bei einem großen Regelbereich können die Schützspulen der Schütze K1 und K5 zusätzlich über Isoliertransformatoren angeschlossen werden. Durch die Art der Schaltung wird die Schaltspannung der Schütze sicher auf die jeweilige Stufenspannung begrenzt. Da es im Rahmen der Erfindung liegt, normale Dreiphasenschütze zum Schalten einer Phase zu verwenden, können die drei Strombahnen in Reihe geschaltet werden, damit die Luft- und Isolierstrecken der Kontakte für die im offenen Zustand auftretende Gesamtspannung des Regelbereiches ausreichen. Die Schütze K1 und K5 sind vorzugsweise mechanisch verklinkt, damit beim Einschalten des Anlauftransformators 1 die erste Anlaufstufe bereits durchgeschaltet ist und das vorzugsweise eingesetzte Niederspannungsschütz keine Hochspannung schalten muß. Schütz K5 ist zweckmäßigerweise mechanisch verklinkt, weil nach erfolgtem Anlauf der Anlauftransformator 1 und damit die Speisespannung für die Schütze abgeschaltet wird, das Schütz K5 aber die direkte Verbindung von Netz und Motor 2 aufrechterhalten muß. Es liegt im Rahmen der Erfindung, daß die Spulen der vorzugsweise eingesetzten Niederspannungsschütze mit Gleichspannung betrieben werden. - Ein bevorzugt vorgesehener Parallelkondensator 4 sorgt dafür, daß beim Ausfall der Steuerspannung die Schütze erst nach Hauptschütz H und Sternschütz S öffnen und so das Schalten von Hochspannung durch die Niederspannungsschütze verhindern.

In den Figuren nicht dargestellt ist eine bevorzugt vorgesehene elektronische Steuereinrichtung zur Steuerung der Umschaltung in die einzelnen Anlaufstufen, vorzugsweise nach Maßgabe des ermittelten Motorstromes. Alle Schaltvorgänge werden zweckmäßigerweise elektronisch über einen Mikroprozessor gesteuert. Die Pausen zwischen den einzelnen Umschaltungen können mit der elektronischen Steuereinrichtung so weit verlängert werden, daß Ausgleichsvorgänge abgeschlossen sind, bevor die nächste Umschaltung erfolgt.

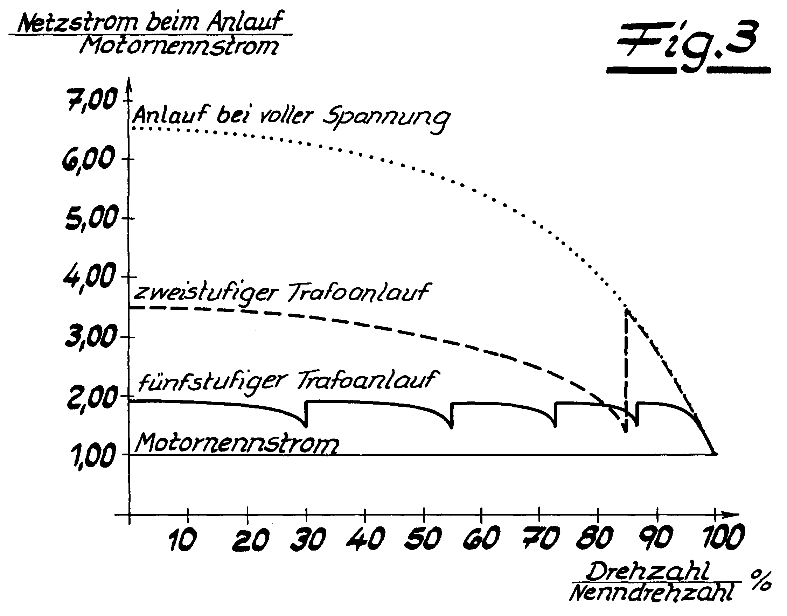

In Fig. 3 sind im Vergleich die Stromkurven für die erfindungsgemäße Anlaufschaltung und für eine Anlaufschaltung nach dem Stand der Technik dargestellt. Die im Diagramm gemäß Fig. 2 punktierte Kurve steht für einen Anlauf des Motors 2 bei voller Spannung, das heißt ohne Anlaufhilfsmittel. - Die gestrichelte Kurve steht für eine aus dem Stand der Technik bekannte zweistufige Anlaufschaltung. Die dick durchgezogene Kurve steht für die erfindungsgemäße Anlaufschaltung mit fünf Anlaufstufen. Es ist deutlich erkennbar, daß die Einschaltströme und Umschaltströme bei der erfindungsgemäßen Anlaufschaltung wesentlich geringer sind als bei der Anlaufschaltung nach dem Stand der Technik.

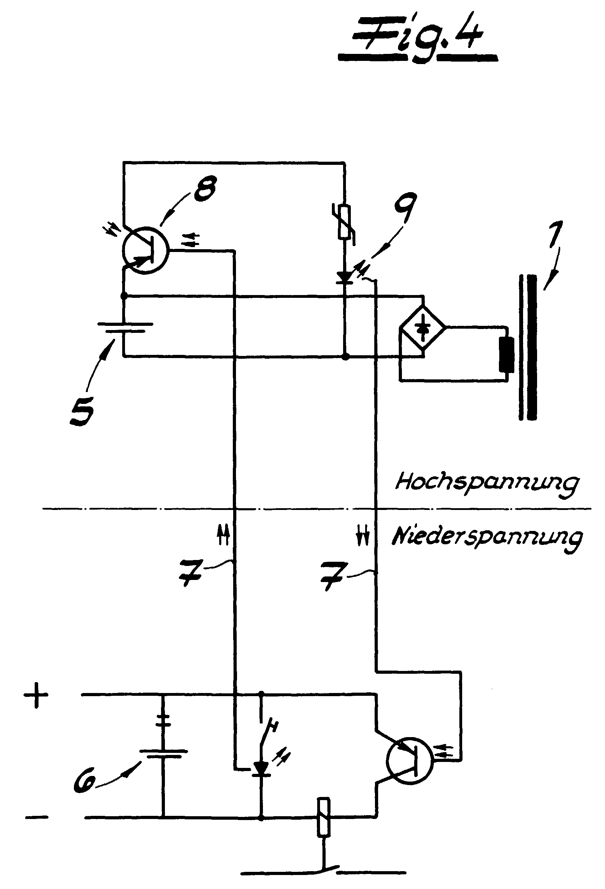

In Fig. 4 ist eine erfindungsgemäße Überhitzungsschutzeinrichtung für die Anlaufschaltung dargestellt. Die Überhitzungsschutzeinrichtung nach Fig. 4 ist für Hochspannungsgeräte geeignet. Im Ausführungsbeispiel nach Fig. 4 ist auf der Hochspannungsseite ein Kondensator 5 vorgesehen und ist auf der Niederspannungsseite ebenfalls ein Kondensator 6 vorgesehen. Beim Startvorgang bzw. beim Anlaufstart werden beide Kondensatoren 5, 6 geladen. Die Entladezeit beider Kondensatoren 5, 6 ist länger als die Abkühlzeit des Anlauftransformators 1. Wenn beide Kondensatoren 5, 6 entladen sind, ist somit der Anlauftransformator 1 kalt genug, so daß der Anlauf gestartet werden kann. Bei geladenem Kondensator 6 geht bevorzugt über Lichtleiter 7 ein Lichtimpuls von der Niederspannungsseite zur Hochspannungsseite und steuert zweckmäßigerweise einen Fototransistor 8 durch. Der Anlauftransformator 1 weist vorzugsweise einen nicht dargestellten Kaltleiter auf. Bei kaltem Anlauftransformator 1 und somit niederohmigem Kaltleiter gibt eine mit dem Kaltleiter in Reihe liegende Leuchtdiode 9 ein Lichtsignal, vorzugsweise über Lichtleiter 7, zur Niederspannungsseite ab und dadurch wird der Start freigegeben. Bei heißem Anlauftransformator 1 und hochohmigem Kaltleiter wird dagegen der Start bzw. der Anlauf gesperrt.

Nach bevorzugter Ausführungsform der Erfindung erfolgt die Steuerung der Schütze und erfolgen evtl. Störmeldungen von den einzelnen Phasen mit Hilfe einer elektronischen Steuereinrichtung, vorzugsweise mittels Lichtleiter. Dadurch werden Isolationsprobleme vermieden und die erfindungsgemäße Schaltungsart vorteilhaft ermöglicht. Durch eine geeignete elektronische Schaltung wird bei Störungen aller Art (festhängende oder blockierte Schütze, Ausfall der Speisespannung usw.) der Anlaufvorgang abgebrochen und werden damit Schäden am Gerät verhindert.

## Patentansprüche

1. Anlaufschaltung mit Anlauftransformator (1) für einen Drehstrom-Kurzschlußläufermotor (2),
wobei die Anlaufschaltung Schaltschütze zur Einstellung mehrerer Anlaufstufen für den Anlauf des Drehstrom-Kurzschlußläufermotors (2) aufweist, **dadurch gekennzeichnet**,
daß zwischen je zwei Anlaufstufen in Form von Spannungsstufen Überschaltelemente aus einem Schaltschütz und einer Drossel (D1, D2) vorgesehen sind.

2. Anlaufschaltung nach Anspruch 1, dadurch gekennzeichnet, daß eine elektronische Steuereinrichtung zur Steuerung der Umschaltung in die verschiedenen Anlaufstufen nach Maßgabe des ermittelten Motorstromes vorgesehen ist.

3. Anlaufschaltung nach einem der Ansprüche 1 oder 2, dadurch gekennzeichnet, daß mit der Anlaufschaltung drei Anlaufstufen einstellbar sind und daß zwischen der ersten und der zweiten Anlaufstufe Überschaltelemente in Form eines Schaltschützes und einer Drossel (D1, D2) vorgesehen sind.

4. Anlaufschaltung nach einem der Ansprüche 1 oder 2, dadurch gekennzeichnet, daß mit der Anlaufschaltung fünf Anlaufstufen einstellbar sind und daß zwischen der ersten und der zweiten Anlaufstufe sowie zwischen der dritten und der vierten Anlaufstufe Überschaltelemente in Form eines Schaltschützes und einer Drossel vorgesehen sind.

5. Anlaufschaltung nach einem der Ansprüche 2 bis 4, dadurch gekennzeichnet, daß eine Wandlereinrichtung zur Erzeugung einer dem Motorstrom proportionalen Spannung vorgesehen ist und daß die Umschaltungen nach Maßgabe der Spannung mit der elektronischen Steuerungseinrichtung steuerbar sind.

6. Anlaufschaltung nach einem der Ansprüche 1 bis 5, dadurch gekennzeichnet, daß die Schützspulen der Schaltschütze an eine auf Hochspannungspotential liegende Hilfswicklung (3) des Anlauftransformators (1) angeschlossen sind.

7. Anlaufschaltung nach einem der Ansprüche 1 bis 6, dadurch gekennzeichnet, daß eine Überhitzungsschutzeinrichtung zum Blockieren des Anlaufstartes bei zu hoher Temperatur des Anlauftransformators (1) vorgesehen ist, wobei die Überhitzungsschutzeinrichtung zumindest einen Kondensator (5, 6) aufweist, dessen Entladezeit länger ist als die Abkühlzeit des Anlauftransformators (1) und wobei bei entladenem Kondensator (5, 6) der Anlaufstart der Anlaufschaltung freigegeben ist.

8. Anlaufschaltung nach Anspruch 7, dadurch gekennzeichnet, daß die Überhitzungsschutzeinrichtung zumindest einen Kaltleiter am Anlauftransformator (1) aufweist und wobei bei geladenem Kondensator (5, 6) und niederohmigem Kaltleiter der Anlaufstart freigegeben ist.
